(19) Europäisches Patentamt
European Patent Office
Office européen des brevets

(11) EP 3 231 841 B1

(12) **EUROPEAN PATENT SPECIFICATION**

(45) Date of publication and mention of the grant of the patent:
**24.06.2020 Bulletin 2020/26**

(21) Application number: **15867018.2**

(22) Date of filing: **02.12.2015**

(51) Int Cl.:
***C08L 9/06*** *(2006.01)* ***C08J 3/20*** *(2006.01)*
***C08K 3/36*** *(2006.01)* ***C08K 5/5398*** *(2006.01)*
***C08K 5/548*** *(2006.01)* ***C08K 5/00*** *(2006.01)*

(86) International application number:
**PCT/JP2015/083932**

(87) International publication number:
**WO 2016/093129 (16.06.2016 Gazette 2016/24)**

# (54) RUBBER COMPOSITION AND MANUFACTURING METHOD FOR RUBBER COMPOSITION

KAUTSCHUKZUSAMMENSETZUNG UND HERSTELLUNGSVERFAHREN FÜR DIE KAUTSCHUKZUSAMMENSETZUNG

COMPOSITION DE CAOUTCHOUC ET PROCÉDÉ DE PRÉPARATION DE COMPOSITION DE CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2014 JP 2014250221**

(43) Date of publication of application:
**18.10.2017 Bulletin 2017/42**

(73) Proprietor: **Bridgestone Corporation**
**Tokyo 104-8340 (JP)**

(72) Inventor: **YONEMOTO, Makiko**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
**WO-A1-2011/048034**
**WO-A1-2011/048034**
**WO-A1-2013/099822**
**JP-A- H10 324 776**
**JP-A- 2002 521 516**
**JP-A- 2014 530 949**
**US-A- 5 939 493**
**US-A1- 2014 107 285**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 231 841 B1

## Description

### TECHNICAL FIELD

The present invention relates to a method for producing a rubber composition containing a rubber component, a filler, a silane coupling agent and an accelerator.

### BACKGROUND ART

Recently, in association with the movement of global regulation of carbon dioxide emission associated with the increase in attraction to environmental concerns, the demand for low fuel consumption by automobiles is increasing. To satisfy the requirement, it is desired to reduce rolling resistance relating to tire performance. Heretofore, as a means for reducing the rolling resistance of tires, a method of optimizing tire structures has been investigated; however, at present, a technique of using a low-heat-generating rubber composition for tires as the rubber composition applied to tires has been adopted as the most common method.

As such a low-heat-generating rubber composition, there has been proposed a rubber composition containing a rubber component, an inorganic filler such as silica, a silane coupling agent for preventing the aggregation of the inorganic filler in the rubber composition, and the like. Further, it has been disclosed that by containing zinc dithiophosphate and a guanidine derivative in the aforementioned constitution, there can be obtained a rubber composition having a good prevulcanization (scorch) resistance in an unvulcanized state, and a good processability in an unvulcanized state (see PTL 1).

### CITATION LIST

### PATENT LITERATURE

PTL 1: JP-T 2002-521516

### SUMMARY OF INVENTION

### TECHNICAL PROBLEM

However, from the viewpoint of the processability in an unvulcanized state, a further improvement from the rubber composition described in PTL 1 has been demanded. Accordingly, an object of the present invention is to provide a method for producing a rubber composition being good in the processability in an unvulcanized state, and having a low-heat-generation property and a low abrasion property.

### SOLUTION TO PROBLEM

The present inventor has obtained an experimental finding that by further adding a specific inorganic salt to a rubber composition containing a rubber component containing a copolymer of a conjugated diene compound and an aromatic vinyl compound, an inorganic filler such as silica, and a silane coupling agent or the like, the Mooney viscosity in an unvulcanized state (hereinafter, sometimes referred to as the unvulcanized viscosity) can be reduced, and thus has reached the present invention.

Specifically, the present invention provides a method for producing a rubber composition comprising a rubber component (A) containing a copolymer of a conjugated diene compound and an aromatic vinyl compound, a filler containing an inorganic filler (B), a silane coupling agent (C), and at least one accelerator (D) selected from the group consisting of zinc dithiophosphates represented by the general formula (1).

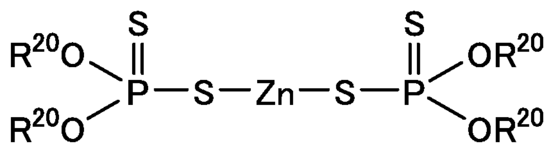

(1)

In the formula, $R^{20}$'s each independently represent hydrogen or a monovalent hydrocarbon group, and at least

one of $R^{20}$'s is a substituted or unsubstituted linear alkyl group having from 7 to 18 carbon atoms, a substituted or unsubstituted branched-chain alkyl group having from 7 to 18 carbon atoms, or a substituted or unsubstituted cycloalkyl group having from 7 to 18 carbon atoms.

The method comprises a plurality of stages of kneading, wherein in the first stage, the rubber component (A), the whole or a part of the inorganic filler (B) and the whole or a part of the silane coupling agent (C) are kneaded, and then the accelerator (D) is added thereto and further kneaded.

ADVANTAGEOUS EFFECTS OF INVENTION

According to the present invention, there is provided a method for producing a rubber composition being good in the processability in an unvulcanized state, and having a low-heat-generation property and a low abrasion property.

DESCRIPTION OF EMBODIMENTS

[Rubber Composition]

The present invention will be described in detail below. A rubber composition obtained by the method is a rubber composition comprising a rubber component (A) containing a copolymer (hereinafter, described as the copolymer P) of a conjugated diene compound and an aromatic vinyl compound, a filler containing an inorganic filler (B), a silane coupling agent (C), and at least one accelerator (D) selected from the group consisting of zinc dithiophosphates represented by the general formula (1).

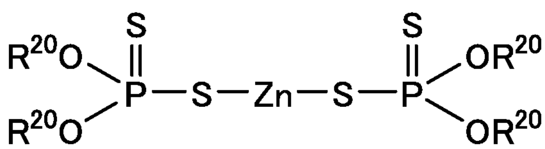

(1)

In the formula, $R^{20}$'s each independently represent hydrogen or a monovalent hydrocarbon group, and at least one of $R^{20}$'s is a substituted or unsubstituted linear alkyl group having from 7 to 18 carbon atoms, a substituted or unsubstituted branched-chain alkyl group having from 7 to 18 carbon atoms, or a substituted or unsubstituted cycloalkyl group having from 7 to 18 carbon atoms.

In the rubber composition, ordinarily, various kinds of mixing agents that are used in a rubber composition, such as a vulcanization activator such as zinc flower, and an antiaging agent may be mixed. These mixing agents are preferably mixed and kneaded depending on necessity, in the first stage or the final stage of kneading, or in the intermediate stage between the first stage and the final stage.

In the production of the rubber composition according to the present embodiment, a kneading apparatus such as a Banbury mixer, a roll mixer, or an intensive mixer can be used.

In the rubber composition, depending on necessity, one or more vulcanizing agents selected from the group consisting of sulfur, a sulfur compound, an inorganic metal compound, a polyamine and an organic peroxide may be mixed. Here, as sulfur, there are used various powder sulfur such as petroleum-derived sulfur, volcano-originated sulfur, mineral-derived sulfur, precipitated sulfur, colloidal sulfur, and insoluble sulfur. Examples of the sulfur compound include morpholine disulfide, sulfur chloride, polymer polysulfide, tetramethylthiouram disulfide, selenium dimethyldithiocarbamate, and 2-(4'-morphplinodithio)benzothiazole.

Examples of the inorganic metal other than sulfur include selenium and tellurium; examples of the inorganic metal compound include magnesium oxide, lead monoxide (litharge), and zinc dioxide. Examples of the polyamines include hexamethylene diamine, triethylene tetramine, tetraethylene pentamine, hexamethylenediamine carbamate, N,N-dicinnamylidene-1,6-hexanediamine, 4,4'-methylene bis(cyclohexylamine) carbamate, 4,4'-methylenebis(2-chloroaniline); examples of organic peroxide include tert-butylhydroperoxide, cumene hydroperoxide, di-tert-butyl peroxide, dicumyl peroxide, tert-butyl cumyl peroxide, diisopropylbenzene hydroperoxide, 1,1,3,3-tetramethylbutyl hydroperoxide, and benzoyl peroxide.

In the rubber composition according to the present embodiment, a vulcanizing agent is mixed preferably in an amount of from 0.3 to 15 parts by mass and more preferably in an amount of from 0.5 to 10 parts by mass per 100 parts by mass of the rubber component. The vulcanizing agents may be used each alone or in combinations of two or more thereof.

In the rubber composition according to the present embodiment, depending on necessity, carbon black may

be further mixed as a filler in an amount of from 5 to 100 parts by mass per 100 parts by mass of the rubber component containing the copolymer P. By mixing carbon black in an amount of from 5 to 100 parts by mass, the fracture resistance of the vulcanized rubber composition can be further improved. In addition, by mixing carbon black in an amount of 100 parts by mass or less, it is possible to prevent the formation of the polymer network of the copolymer P from disturbance. From this viewpoint, carbon black is mixed preferably in an amount of 80 parts by mass or less, further preferably in an amount of 60 parts by mass or less and particularly preferably in an amount of 50 parts by mass or less.

The nitrogen adsorption specific surface area ($N_2$ SA) of the carbon black used as a filler in the present invention is preferably 20 to 200 $m^2/g$. This is because when the $N_2$ SA is 20 $m^2/g$ or more, the reinforcement of the rubber composition can be favorably secured, and when the $N_2$ SA is 200 $m^2/g$ or less, the low-heat-generation property can be improved. Specific examples of the carbon black include SRF, GPF, FEF, HAF, N326, N339, N347, N351, IISAF, ISAF, and SAF. These carbon blacks may be used each alone or in combinations of two or more thereof.

In the rubber composition according to the present embodiment, within ranges not impairing the object of the present invention, various kinds of chemicals that are ordinarily used in the rubber industrial field, such as process oil, an antiaging agent, an antiscorching agent, zinc flower, and stearic acid may be mixed depending on the necessity.

The rubber composition according to the present embodiment is obtained by kneading with a kneader such as an open type kneader such as a roll mixer or a closed type kneader such as a Banbury mixer, subjected to vulcanization after molding processing, and is applicable to various kinds of rubber products. The rubber composition can be used, for example, in the applications to members for tires such as tire treads, under treads, carcasses, side walls, side reinforcing rubber, bead portions (in particular, bead fillers), and in the applications to industrial products such as vibration proof rubber, fenders, belts, hoses, and others. In particular, the rubber composition can be used favorably as a rubber composition, excellent in the balance among low-heat-generation property, abrasion resistance, and fracture resistance, for treads of low fuel cost tires, large tires, and high performance tires.

[Rubber Component (A)]

<Copolymer P>

The rubber component (A) usable in the rubber composition according to the embodiment of the present invention contains a copolymer P of a conjugated diene compound and an aromatic vinyl compound.

Examples of the conjugated diene compound favorably include one or more compounds selected from the group consisting of isoprene, 1,3-butadiene, 1,3-pentadiene, 2,3-dimethyl-1,3-butadiene, 2-phenyl-1,3-butadiene and 1,3-hexadiene. These may be used each alone or in combinations of two or more thereof; however, among these, isoprene, 1,3-butadiene and 2,3-dimethyl-1,3-butadiene are further preferred, and isoprene and 1,3-butadiene are particularly preferred.

Examples of the aromatic vinyl compound usable for the polymerization with the conjugated diene compound favorably include one or more compounds selected from the group consisting of styrene, α-methylstyrene, 1-vinylnaphthalene, 3-vinyltoluene, ethyl vinyl benzene, divinyl benzene, 4-cyclohexylstyrene, and 2,4,6-trimethylstyrene. These may be used each alone or in combinations of two or more thereof; however, among these, styrene is particularly preferred.

Because of being excellent in practical aspects such as the easiness in availability of monomers, it is particularly favorable to use 1,3-butadiene as the conjugated diene compound and styrene as the aromatic vinyl compound.

The rubber component (A) may also contain, in addition to the copolymer P of the conjugated diene compound and the aromatic vinyl compound, a homopolymer of a conjugated diene such as polybutadiene or polyisoprene, or a homopolymer of an aromatic vinyl compound such as polystyrene.

<Method for Polymerizing Copolymer P>

As the polymerization method for obtaining the copolymer P, it is possible to use any of an emulsion polymerization method, a solution polymerization method, a vapor phase polymerization method, and a bulk polymerization method. Among these, the emulsion polymerization method is preferred. A post-vulcanization rubber composition obtained by compounding the copolymer P obtained by using an emulsion polymerization method is higher in abrasion resistance or tensile strength, and better in fracture resistance as compared to the post-vulcanization rubber compositions obtained by compounding the copolymers P obtained by using the other polymerization methods. In addition, the emulsion polymerization method is more suppressed in production cost and is higher in supply stability than the other polymerization methods.

(Emulsion Polymerization Method)

The copolymer P can be produced by an ordinary emulsion polymerization method. For example, a predetermined amount of a conjugated diene compound monomer and a predetermined amount of an aromatic vinyl compound monomer are emulsified and dispersed in the presence of an emulsifier, and are subjected to emulsion polymerization by a radical polymerization initiator.

As the emulsifier, for example, a salt of a long chain fatty acid having 10 or more carbon atoms or a rosin acid salt is used. Specific examples of the emulsifier include potassium salts or sodium salts of fatty acids such as capric acid, lauric acid, myristic acid, palmitic acid, oleic acid, and stearic acid.

As a dispersant, water is used ordinarily, and within a range not disturbing the stability during polymerization, the dispersant may contain a water-soluble organic solvent such as methanol or ethanol. Examples of the radical polymerization initiator include persulfates such as ammonium persulfate and potassium persulfate, organic peroxides and hydrogen peroxide.

In order to control the molecular weight of the obtained copolymer P, a chain transfer agent may also be used. Examples of the chain transfer agent include mercaptans such as t-dodecyl mercaptan and n-dodecyl mercaptan; carbon tetrachloride, thioglycolic acid, diterpene, terpinolene, $\gamma$-terpinene and $\alpha$-methylstyrene dimer.

The temperature of the emulsion polymerization can be appropriately selected according to the type of the radical polymerization initiator used, but is ordinarily preferably 0 to 100°C and more preferably 0 to 60°C. The polymerization mode may be either continuous polymerization or batch polymerization. The polymerization reaction can be terminated by the addition of a polymerization terminator.

Examples of the polymerization terminator include amine compounds such as isopropyl hydroxylamine, diethyl hydroxylamine, and hydroxylamine; quinone compounds such as hydroquinone and benzoquinone; and sodium nitrite.

After the termination of the polymerization reaction, an antiaging agent may also be added depending on necessity. After the termination of the polymerization reaction, the unreacted monomers are removed from the obtained latex depending on necessity; subsequently, the polymer is coagulated by using a salt such as sodium chloride, calcium chloride or potassium chloride as a coagulant while the pH of the coagulation system is being controlled to a predetermined value by adding an acid such as nitric acid or sulfuric acid depending on necessity; then, by separating the dispersion solvent, the polymer can be recovered as a crumb. The crumb is washed with water, subsequently dehydrated, then dried with a hand dryer, and thus the copolymer P is obtained. It is to be noted that the latex and the extension oil in a form of emulsion dispersion are preliminarily mixed with each other during coagulation, depending on necessity, and thus the copolymer P may be recovered as an oil-extended rubber.

(Solution Polymerization Method)

The copolymer P can also be produced by an ordinary solution polymerization method. For example, in a solvent, by using an anion-polymerizable active metal, the conjugated diene compound and the aromatic vinyl compound are copolymerized in the presence of a polar compound depending on necessity.

Examples of the anion-polymerizable active metal include: alkali metals such as lithium, sodium, and potassium; alkali earth metals such as beryllium, magnesium, calcium, strontium, and barium; and lanthanoid rare earth metals such as lanthanum and neodymium. Among these, the alkali metals and the alkali earth metals are preferred, and the alkali metals are more preferred. Moreover, among the alkali metals, organoalkali metal compounds are more preferably used.

Examples of the organoalkali metal compounds include: organomonolithium compounds such as n-butyllithium, sec-butyllithium, t-butyllithium, hexyllithium, phenyllithium, and stilbenelithium; multifunctional organolithium compounds such as dilithiomethane, 1,4-dilithiobutane, 1,4-dilithio-2-ethyl cyclohexane, and 1,3,5-trilithiobenzene; and sodium naphthalene and potassium naphthalene. Among these, the organolithium compounds are preferred, and the organomonolithium compounds are more preferred. The amount used of the organoalkali metal compound is appropriately determined according to the required molecular weight of S-SBR.

The organoalkali metal compound can also be used as an organoalkali metal amide obtained by allowing the organoalkali metal compound to react with a secondary amine such as dibutylamine, dihexylamine, or dibenzylamine.

Examples of the polar compound include: ether compounds such as dibutyl ether, diethyl ether, tetrahydrofuran, dioxane, and ethylene glycol diethyl ether; pyridine; tertiary amines such as tetramethyl ethylenediamine, and trimethylamine; alkali metal alkoxides such as potassium t-butoxide; and phosphine compounds. The polar compound is used preferably within a range from 0.01 to 1000 molar equivalents per one mole of the organoalkali metal compound.

Examples of the solvent include: aliphatic hydrocarbons such as n-butane, n-pentane, isopentane, n-hexane, n-heptane, and isooctane; alicyclic hydrocarbons such as cyclopentane, cyclohexane, and methylcyclopentane; and aromatic hydrocarbons such as benzene and toluene. These solvents are ordinarily preferably used within a monomer concentration range from 1 to 50% by mass.

The temperature of the polymerization reaction is ordinarily from -80 to 150°C, preferably from 0 to 100°C, and further preferably from 30 to 90°C. The polymerization mode may be either batch polymerization or continuous polymerization. In addition, in order to improve the random copolymerizability of styrene and butadiene, it is preferred to supply

styrene and butadiene continuously or intermittently in the reaction solution, in such a manner that the compositional ratio between styrene and butadiene in the polymerization system falls within a specific range.

In the polymerization reaction, the reaction can be terminated by adding an alcohol such as methanol or isopropanol as a polymerization terminator. The solvent is separated from the polymerization solution after the polymerization reaction termination by, for example, a direct drying or a steam stripping, and the targeted S-SBR can be recovered. It is to be noted that before the solvent is removed, the polymerization solution and an extension oil are preliminarily mixed with each other, and the targeted S-SBR may also be recovered as an oil-extended rubber.

[Inorganic Filler (B)]

The inorganic filler (B) usable in the rubber composition according to the embodiment of the present invention is preferably silica and an inorganic compound represented by the following general formula (XI):

$$dM^1 \cdot xSiO_y \cdot zH_2O \text{ ...} \qquad (XI)$$

In the general formula (XI), $M^1$ represents at least one selected from, a metal selected from the group consisting of aluminum, magnesium, titanium, calcium, and zirconium, and the group consisting of oxides or hydroxides of these metals, hydrates thereof, and carbonates of these metals; and d, x, y and z represent an integer of from 1 to 5, an integer of from 0 to 10, an integer of from 2 to 5 and an integer of from 0 to 10, respectively.

In the case where both x and z are 0 in the general formula (XI), the inorganic compound is at least one metal selected from the group consisting of aluminum, magnesium, titanium, calcium and zirconium, or an oxide of the metal or a hydroxide of the metal.

In the embodiment of the present invention, the inorganic filler (B) is preferably silica from the viewpoint of achieving both the low rolling resistance and the abrasion resistance. Any of commercially available products may be used as the silica, and among these, wet method silica, dry method silica and colloidal silica are preferably used, and wet method silica is particularly preferably used. The silica preferably has a BET specific surface area (measured according to ISO 5794/1) of from 40 to 350 $m^2/g$. The silica having a BET specific surface area within the range has an advantage that both the rubber reinforcement and the dispersibility in the rubber component can be achieved. From this viewpoint, the silica having a BET specific surface area in a range of from 80 to 350 $m^2/g$ is more preferred, and the silica having a BET specific surface area in a range of from 120 to 350 $m^2/g$ is particularly preferred. As such silica, a commercially available product such as "Nipsil AQ" (BET specific surface area: 205 $m^2/g$) and "Nipsil KQ," trade names, both manufactured by Tosoh Silica Corporation, or "Ultrasil VN3" (BET specific surface area: 175 $m^2/g$), a trade name, manufactured by Degussa AG can be used.

Examples of the inorganic compound represented by the general formula (XI), and usable herein include: alumina ($Al_2O_3$) such as $\gamma$-alumina and $\alpha$ -alumina; alumina monohydrate ($Al_2O_3 \cdot H_2O$) such as boehmite and diaspore; aluminum hydroxide [$Al(OH)_3$] such as gypsite and bayerite; aluminum carbonate [$Al_2(CO_3)_3$], magnesium hydroxide [$Mg(OH)_2$], magnesium oxide ($MgO$), magnesium carbonate ($MgCO_3$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide ($CaO$), calcium hydroxide [$Ca(OH)_2$], aluminum magnesium oxide ($MgO \cdot Al_2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicates (such as $Al_2SiO_5$, $Al_4 \cdot 3SiO_4 \cdot 5H_2O$), magnesium silicates (such as $Mg_2SiO_4$ and $MgSiO_3$), calcium silicates (such as $Ca_2 \cdot SiO_4$), aluminum calcium silicates (such as $Al_2O_3 \cdot CaO \cdot 2SiO_2$), magnesium calcium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$]; and crystalline aluminosilicates containing a charge-correcting hydrogen, alkali metal or alkaline earth metal, such as various types of zeolites. Furthermore, preferred is a case where $M^1$ in the general formula (XI) is at least one selected from the group consisting of aluminum metal, the oxide or hydroxide of aluminum and the hydrates thereof, and aluminum carbonate.

The inorganic compounds represented by the general formula (XI) may be used each alone or as a mixture of two or more thereof. The average particle size of these inorganic compounds is preferably in a range of from 0.01 to 10 $\mu$m, and more preferably in a range of from 0.05 to 5 $\mu$m, from the viewpoint of the balance among the kneading processability, the abrasion resistance and the wet grip performance, and the like.

As the inorganic filler (B) in the present invention, silica may be used alone, or silica and at least one of the inorganic compound represented by the general formula (III) may be used in combination.

The filler usable in the rubber composition according to the present embodiment may contain carbon black depending on necessity in addition to the inorganic filler (B). Carbon black contained may provide an effect of decreasing the electric resistance and preventing static charge. The carbon black used is not particularly limited, and preferred examples thereof include carbon black of the grades SAF, ISAF, IISAF, N339, HAF, FEF, GPF and SRF, with high, medium or low structure, and particularly preferred examples among these include carbon black of the grades SAF, ISAF, IISAF, N339, HAF and FEF. The carbon black preferably has a nitrogen adsorption specific surface area of from

30 to 250 $m^2/g$ ($N_2$ SA, measured according to JIS K6217-2 (2001)). These carbon blacks may be used each alone or as combination of two or more thereof. In the present invention, carbon black is not contained in the inorganic filler (B).

The inorganic filler (B) of the rubber composition according to the present embodiment is preferably used in an amount of from 20 to 120 parts by mass per 100 parts by mass of the rubber component (A). The amount is preferably 20 parts by mass or more for ensuring the wet performance, and the amount is preferably 120 parts by mass or less for improving the low-heat-generation property. The amount thereof used is more preferably from 30 to 100 parts by mass.

The filler of the rubber composition according to the present invention is preferably used in an amount of from 20 to 150 parts by mass per 100 parts by mass of the rubber component (A). The amount is preferably 20 parts by mass or more for enhancing the reinforcement of the rubber composition, and the amount is preferably 150 parts by mass or less for improving the low-heat-generation property.

The amount of the inorganic filler (B) in the filler is preferably 40% by mass or more, and further preferably 70% by mass or more, from the viewpoint of achieving both the wet performance and the low-heat-generation property.

[Silane Coupling Agent (C)]

The silane coupling agent (C) used in the rubber composition according to the embodiment of the present invention is preferably at least one compound selected from the group consisting of the compounds represented by the following general formulae (I) and (II).

The use of such a silane coupling agent (C) allows the rubber composition according to the present embodiment to be superior in the workability during the rubber processing and to provide pneumatic tires having better abrasion resistance.

The following general formulae (I) and (II) will be described in this order below.

$$(R'O)_{3-p}(R^2)_pSi\text{-}R^3\text{-}S_a\text{-}R^3\text{-}Si(OR^1)_{3-r}(R^2)_r \cdots \qquad (I)$$

In the formula, $R^1$'s may be the same as or different from each other, and each represents a linear, cyclic or branched alkyl group having from 1 to 8 carbon atoms, or a linear or branched alkoxyalkyl group having from 2 to 8 carbon atoms; $R^2$'s may be the same as or different from each other, and each represents a linear, cyclic or branched alkyl group having from 1 to 8 carbon atoms; $R^3$'s may be the same as or different from each other, and each represents a linear or branched alkylene group having from 1 to 8 carbon atoms; a is from 2 to 6 in terms of average value; and p and r may be the same as or different from each other, and are each from 0 to 3 in terms of average value, provided that both p and r are not 3 simultaneously.

Specific examples of the silane coupling agent (C) represented by the general formula (I) include bis(3-triethoxysilylpropyl) tetrasulfide, bis(3-trimethoxysilylpropyl) tetrasulfide, bis(3-methyldimethoxysilylpropyl) tetrasulfide, bis(2-triethoxysilylethyl) tetrasulfide, bis(3-triethoxysilylpropyl) disulfide, bis(3-trimethoxysilylpropyl) disulfide, bis(3-methyldimethoxysilylpropyl) disulfide, bis(2-triethoxysilylethyl) disulfide, bis(3-triethoxysilylpropyl) trisulfide, bis(3-trimethoxysilylpropyl) trisulfide, bis(3-methyldimethoxysilylpropyl) trisulfide, bis(2-triethoxysilylethyl) trisulfide, bis(3-monoethoxydimethylsilylpropyl) tetrasulfide, bis(3 -monoethoxydimethylsilylpropyl) trisulfide, bis(3-monoethoxydimethylsilylpropyl) disulfide, bis(3-monomethoxydimethylsilylpropyl) tetrasulfide, bis(3 -monomethoxydimethylsilylpropyl) trisulfide, bis(3-monomethoxydimethylsilylpropyl) disulfide, bis(2-monoethoxydimethylsilylethyl) tetrasulfide, bis(2-monoethoxydimethylsilylethyl) trisulfide and bis(2-monoethoxydimethylsilylethyl) disulfide.

$$(R^4O)_{3-s}(R^5)_sSi\text{-}R^6\text{-}S_k\text{-}R^7\text{-}S_k\text{-}R^6\text{-}Si(OR^4)_{3-t}(R^5)_t \cdots \qquad (II)$$

In the formula, $R^4$'s may be the same as or different from each other, and each represents a linear, cyclic or branched alkyl group having from 1 to 8 carbon atoms, or a linear or branched alkoxyalkyl group having from 2 to 8 carbon atoms; $R^5$'s may be the same as or different from each other, and each represents a linear, cyclic or branched alkyl group having from 1 to 8 carbon atoms; $R^6$'s may be the same as or different from each other, and each represents a linear or branched alkylene group having from 1 to 8 carbon atoms; $R^7$ represents any one of divalent groups represented by the general formulae ($-S-R^8-S-$), ($-R^9-S_{m1}-R^{10}-$) and ($-R^{11}-S_{m2}-R^{12}-S_{m3}-R^{13}-$) ($R^8$ to $R^{13}$ may be the same as or different from each other, and each represents a divalent aliphatic hydrocarbon group having from 1 to 20 atoms, a divalent alicyclic hydrocarbon group having from 3 to 20 carbon atoms, a divalent aromatic group or a divalent organic group containing a hetero element other than sulfur and oxygen; and m1, m2 and m3 may be the same as or different from each other, and are each 1 or more and less than 4 in terms of average value); k's may be the same as or different from each other, and are each from 1 to 6 in terms of average value; and s and t may be the same as or different from each other, and are each from 0 to 3 in terms of average value, provided that both s and t are not 3 simultaneously.

Specific examples of the silane coupling agent (C) represented by the general formula (II) preferably include the compounds represented by:

average compositional formula $(CH_3CH_2O)_3Si-(CH_2)_3-S_2-(CH_2)_6-S_2-(CH_2)_3-Si(OCH_2CH_3)_3$,
average compositional formula $(CH_3CH_2O)_3Si-(CH_2)_3-S_2-(CH_2)_{10}-S_2-(CH_2)_3-Si(OCH_2CH_3)_3$,
average compositional formula $(CH_3CH_2O)_3Si-(CH_2)_3-S_3-(CH_2)_6-S_3-(CH_2)_3-Si(OCH_2CH_3)_3$,
average compositional formula $(CH_3CH_2O)_3Si-(CH_2)_3-S_4-(CH_2)_6-S_4-(CH_2)_3-Si(OCH_2CH_3)_3$,
average compositional formula $(CH_3CH_2O)_3Si-(CH_2)_3-S-(CH_2)_6-S_2-(CH_2)_6-S-(CH_2)_3-Si(OCH_2CH_3)_3$,
average compositional formula $(CH_3CH_2O)_3Si-(CH_2)_3-S-(CH_2)_6-S_{2.5}-(CH_2)_6-S-(CH_2)_3-Si(OCH_2CH_3)_3$,
average compositional formula $(CH_3CH_2O)_3Si-(CH_2)_3-S-(CH_2)_6-S_3-(CH_2)_6-S-(CH_2)_3-Si(OCH_2CH_3)_3$,
average compositional formula $(CH_3CH_2O)_3Si-(CH_2)_3-S-(CH_2)_6-S_4-(CH_2)_6-S-(CH_2)_3-Si(OCH_2CH_3)_3$,
average compositional formula $(CH_3CH_2O)_3Si-(CH_2)_3-S-(CH_2)_{10}-S_2-(CH_2)_{10}-S-(CH_2)_3-Si(OCH_2CH_3)_3$,
average compositional formula $(CH_3CH_2O)_3Si-(CH_2)_3-S_4-(CH_2)_6-S_4-(CH_2)_6-S_4-(CH_2)_3-Si(OCH_2CH_3)_3$,
average compositional formula $(CH_3CH_2O)_3Si-(CH_2)_3-S_2-(CH_2)_6-S_2-(CH_2)_6-S_2-(CH_2)_3-Si(OCH_2CH_3)_3$, and
average compositional formula $(CH_3CH_2O)_3Si-(CH_2)_3-S-(CH_2)_6-S_2-(CH_2)_6-S_2-(CH_2)_6-S-(CH_2)_3-Si(OCH_2CH_3)_3$.

As the silane coupling agent (C) usable in the rubber composition according to the present embodiment, the compounds represented by the general formula (I) are particularly preferred among the compounds represented by the general formulae (I) and (II). This is because by using the compound represented by the general formula (I) as the silane coupling agent (C), the accelerator (D) easily causes the activation of the polysulfide binding site to react with the rubber component (A).

In the present invention, the silane coupling agents (C) may be used each alone or in combinations of two or more thereof.

In the present embodiment, the mixing amount of the silane coupling agent (C) in the rubber composition is preferably such that the mass ratio to the inorganic filler (silane coupling agent/inorganic filler) is 1/100 or more and 20/100 or less. When the ratio is less than 1/100, the improvement effect of the low-heat -generation property of the rubber composition is hardly exhibited, and when the ratio exceeds 20/100, the cost of the rubber composition is excessive and the economic efficiency is decreased. Moreover, the amount of the silane coupling agent is preferably 3/100 or more and 20/100 or less and particularly preferably 4/100 or more and 10/100 or less of the amount of the inorganic filler.

[Accelerator (D)]

The accelerator (D) usable in the rubber composition according to the present embodiment is zinc dithiophosphate. Moreover, the accelerator (D) is preferably at least one dithiophosphate compound selected from the group represented by the following general formula (1):

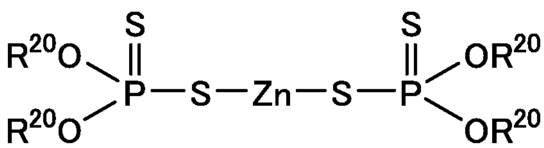

(1)

In the formula, $R^{20}$'s are each independently hydrogen or a monovalent hydrocarbon group, and at least one of $R^{20}$'s is a substituted or unsubstituted linear alkyl group having from 7 to 18 carbon atoms, a substituted or unsubstituted branched-chain alkyl group having from 7 to 18 carbon atoms, or a substituted or unsubstituted cycloalkyl group having from 7 to 18 carbon atoms.

At least one of $R^{20}$'s is preferably a 2-ethylhexyl group, and at least two of $R^{20}$'s are more preferably 2-ethylhexyl groups.

The zinc dithiophosphate represented by the general formula (1) is further preferably zinc di-(2-ethylhexyldithiophospate). As zinc di-(2-ethylhexyldithiophosphate), a product manufactured by Rhein Chemie Corp., commercially available under the trade name of "Rhenocure ZDT/S" can be used.

In the rubber composition according to the present embodiment, the molar quantity of the accelerator (D) in the rubber composition in the first stage of kneading is preferably 0.1 or more and 1.0 or less times the molar quantity of the silane coupling agent (C). This is because when the molar quantity of the accelerator (D) is 0.1 or more times the molar quantity of the silane coupling agent (C), the silane coupling agent (C) is sufficiently activated, and when the molar quantity of the accelerator (D) is 1.0 or less times the molar quantity of the silane coupling agent (C), the vulcanization rate is not significantly affected. Further preferably, the number of molecules (number of moles) of the accelerator (D) is from 0.3 to 1.0 time the number of molecules (number of moles) of the silane coupling agent (C).

The accelerator (D) is also used as the accelerator for the sulfur vulcanization, and accordingly may be mixed

in an appropriate amount in the final stage of kneading according to necessity.

[Organic Acid]

Examples of the organic acid usable in the rubber composition according to the present embodiment include: saturated fatty acids and unsaturated fatty acids such as stearic acid, palmitic acid, myristic acid, lauric acid, arachidic acid, behenic acid, lignoceric acid, capric acid, pelargonic acid, caprylic acid, enanthic acid, caproic acid, oleic acid, vaccenic acid, linoleic acid, linolenic acid, and nervonic acid; and resin acids such as rosin acid and modified rosin acids.

In the method for producing a rubber composition according to the present embodiment, preferably at least 50 mol% of the organic acid is stearic acid, in order that the function as the vulcanization acceleration aid is required to be exhibited sufficiently. Here, 50 mol% or less of the organic acid may be rosin acid (also including the modified rosin acid) and/or fatty acids contained when the styrene-butadiene copolymer is prepared by emulsion polymerization.

[Method for Producing Rubber Composition]

The rubber composition according to the embodiment of the present invention is produced by the following manufacturing method.

The method for producing a rubber composition according to the embodiment of the present invention is a method for producing a rubber composition containing a rubber component (A) containing a copolymer of a conjugated diene compound and an aromatic vinyl compound, a filler containing an inorganic filler (B), a silane coupling agent (C) and at least one accelerator selected from the group consisting of zinc dithiophosphates represented by the general formula (1), wherein the method has a plurality of kneading stages; in the first stage (X) of kneading, the rubber component (A), the whole or a part of the inorganic filler (B) and the whole or a part of the silane coupling agent (C) are kneaded, and then the accelerator (D) is added thereto and further kneaded.

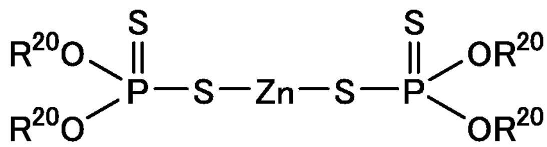

(1)

In the formula, $R^{20}$'s are each independently hydrogen or a monovalent hydrocarbon group, and at least one of $R^{20}$'s is a substituted or unsubstituted linear alkyl group having from 7 to 18 carbon atoms, a substituted or unsubstituted branched-chain alkyl group having from 7 to 18 carbon atoms, or a substituted or unsubstituted cycloalkyl group having from 7 to 18 carbon atoms.

In the present invention, the reason why the accelerator (D) is added and kneaded in the first stage of kneading is for the purpose of enhancing the activity of the coupling function of the silane coupling agent (C).

In the first stage of kneading of the present invention, the rubber component (A), the whole or a part of the inorganic filler (B) and the whole or a part of the silane coupling agent(C) are kneaded, then the accelerator (D) is added and the resulting mixture is further kneaded. Herewith, the reduction of the activity improvement effect of the coupling function, due to the mixing of the accelerator (D) can be further favorably suppressed. After the reaction of the inorganic filler (B) and the silane coupling agent (C) has proceeded sufficiently, the reaction of the silane coupling agent (C) and the rubber component (A) can also be made to proceed.

More preferably, in the first stage of kneading, the accelerator (D) is preferably added 10 seconds or more and 180 seconds or less after the addition of the rubber component (A), the whole or a part of the inorganic filler (B), and the whole or a part of the silane coupling agent (C).

The lower limit of this time is further preferably 30 seconds or more, and the upper limit of this time is further preferably 150 seconds or less and particularly preferably 120 seconds or less. When this time is 10 seconds or more, the reaction of (B) and (C) can be made to proceed sufficiently. Even when this time exceeds 180 seconds, because the reaction of (B) and (C) has already proceeded sufficiently, no additional effect can be expected, and accordingly the upper limit is preferably set to be 180 seconds.

In the embodiment of the present invention, the molar quantity X of the organic acid in the rubber composition in the first stage of kneading is preferably in a relation of the following formula [1] relative to the molar quantity Y of the accelerator (D):

$$0 \leq X \leq 1.5 \times Y \qquad ... [1]$$

This is for the purpose of favorably suppressing the reduction, due to the presence of a large amount of the organic acid, of the activity improvement effect of the coupling function due to the mixing of the accelerator (D). In order to decrease the amount of the organic acid in the first stage (X) of kneading, the organic acid is preferably added in the second stage of kneading or later.

In the embodiment of the present invention, the maximum temperature of the rubber composition in the first stage of kneading is preferably 120°C or higher and 190°C or lower, for the purpose of allowing the reaction of the inorganic filler (B) and the silane coupling agent (C) to proceed sufficiently. From this viewpoint, the maximum temperature of the rubber composition in the first stage of kneading is more preferably 130°C or higher and 190°C or lower, and further preferably 140°C or higher and 180°C or lower.

In the method for producing a rubber composition according to the embodiment of the present invention, the kneading step includes at least two stages of the first stage of kneading not including additives such as a vulcanizing agent exclusive of the accelerator (D) and the final stage of kneading including the additives such as a vulcanizing agent. The kneading step may include the intermediate stage of kneading not including additives such as a vulcanizing agent exclusive of the accelerator (D), depending on necessity. Here, the additives such as a vulcanizing agent means the vulcanizing agent and the vulcanization accelerator.

It is to be noted that in the present embodiment, the first stage of kneading means the first stage in which the rubber component (A), the filler containing the inorganic filler (B), the silane coupling agent (C), and the accelerator (D) are kneaded. The first stage does not include a case of kneading the rubber component (A) and the filler other than the inorganic filler (B), or a case of prekneading the rubber component (A) alone.

EXAMPLES

The present invention will be described in more detail with reference to the following Examples; however, the present invention is not limited to the following Examples at all.

The unvulcanized viscosity, the heat-generation property (tanδ index) and the abrasion resistance were evaluated by the following methods.

<Unvulcanized Viscosity>

According to JIS K6300 "unvulcanized rubber-physical properties-Part 1: Determination of viscosity and scorch time by Mooney viscometer," the measurement temperature was set at 130°C, an L-type rotor was used, and the Moony viscosity ($ML_{1+4}$) of an unvulcanized rubber composition (compounding vulcanizable rubber) was measured. In addition, the Mooney viscosity index was calculated by the following calculation formula. By taking the Mooney viscosity of the unvulcanized rubber composition of Comparative Example 1 as 100, the Moony viscosities were represented as indices. A smaller index means a lower Moony viscosity, and a better processability of the unvulcanized rubber composition.

$$\text{Mooney viscosity index} = \{(\text{Mooney viscosity of unvulcanized rubber composition tested})/(\text{Mooney viscosity of unvulcanized composition of Comparative Example 1})\} \times 100$$

<Heat-Generation Property (tanδ index)>

By using a dynamic shear viscoelasticity meter (manufactured by Rheometrics, Inc.), the tanδ value was measured at a temperature of 60°C, a dynamic strain of 5%, and a frequency of 15 Hz. By taking the tanδ of Comparative Example 1 as 100, the tanδ values were represented as indices. A smaller index means a lower heat generation property and a smaller hysteresis loss.

$$\text{heat generation property index} = \{(\tan\delta \text{ of vulcanized rubber composition tested})/(\tan\delta \text{ of vulcanized rubber composition of Comparative Example 1})\} \times 100$$

<Abrasion Resistance (Index)>

According to JIS K 6264-2 (2005), the abrasion magnitudes were measured by using a Lambourn abrasion tester at a slip rate of 25%, at 23°C, and were represented as indices by taking the reciprocal of the abrasion magnitude of Comparative Example 1 as 100, on the basis of the following formula. A larger index means a smaller abrasion magnitude and a better abrasion resistance.
abrasion resistance index = {(abrasion magnitude of vulcanized rubber composition of Comparative Example 1)/(abrasion magnitude of vulcanized rubber composition tested)} $\times$ 100

<Toughness: TF (Index)>

The toughness (TF) is the integrated value of the stress-strain curve until the specimen is fractured, wherein the stress-strain curve is measured on the basis of JIS K6251 (2010). On the basis of K6251 (2010), at room temperature, the toughness (TF) values represented by the integrated values of the stress-strain curve until the specimens were fractured were measured, and the toughness values were evaluated on the basis of the following formula. A larger toughness index value means a superior poor-road durability.

$$\text{toughness index} = [\{\text{toughness (TF) of post-vulcanization rubber composition tested}\}/\{\text{toughness (TF) of post-vulcanization rubber composition of Comparative Example 1}\}] \times 100$$

[Examples 1 to 3 and Comparative Examples 1 to 6]

Specimen rubber compositions of Examples 1 to 3 and Comparative Examples 1 to 6 were prepared. The ingredients of each of the rubber compositions were kneaded with a Banbury mixer with the maximum temperature of each of the rubber compositions in the first stage (kneading time: 3 minutes) of kneading controlled to be 150°C. The unvulcanized viscosity of each of the obtained rubber compositions, and the heat generation property (tan$\delta$ index), the abrasion resistance, and the toughness of each of the obtained post-vulcanization rubber composition were evaluated by the above-described methods. The results thus obtained are shown in Table 1.

Table 1

| | | | Examples | | | Comparative Examples | | | | | |
|---|---|---|---|---|---|---|---|---|---|---|---|
| parts by mass | | | 1 | 2 | 3 | 1 | 2 | 3 | 4 | 5 | 6 |
| Formulation | Fist Stage of Kneading | E-SBR*1 | 100 | 0 | 100 | 100 | 100 | 0 | 0 | 100 | 100 |
| | | S-SBR*2 | 0 | 100 | 0 | 0 | 0 | 100 | 100 | 0 | 0 |
| | | Carbon Black N220 *3 | 10 | 10 | 10 | 10 | 10 | 10 | 10 | 10 | 10 |
| | | Silica *4 | 55 | 55 | 90 | 55 | 55 | 55 | 55 | 90 | 90 |
| | | Silane Coupling Agent *5 | 5 | 5 | 8.2 | 5 | 5 | 5 | 5 | 8.2 | 8.2 |
| | | Zinc Dithiophosphate A *6 | 1 | 1 | 1.6 | 0 | 0 | 0 | 0 | 0 | 0 |
| | | Zinc Dithiophosphate B *7 | 0 | 0 | 0 | 0 | 1 | 0 | 1 | 0 | 1.6 |
| | | Aromatic Oil | 10 | 10 | 10 | 10 | 10 | 10 | 10 | 10 | 10 |
| | | Stearic Acid | 1 | 2 | 1 | 1 | 1 | 2 | 2 | 1 | 1 |
| | | Wax *8 | 2 | 2 | 2 | 2 | 2 | 2 | 2 | 2 | 2 |
| | | Antiaging Agent 6PPD *9 | 1 | 1 | 1 | 1 | 1 | 1 | 1 | 1 | 1 |
| | Final Stage of Kneading | Antiaging Agent TMQ *10 | 0.3 | 0.3 | 0.3 | 0.3 | 0.3 | 0.3 | 0.3 | 0.3 | 0.3 |
| | | Zinc Flower | 2.5 | 2.5 | 2.5 | 2.5 | 2.5 | 2.5 | 2.5 | 2.5 | 2.5 |
| | | Vulcanization Accelerator DPG *11 | 0.6 | 0.6 | 0.8 | 1.2 | 0.6 | 1.2 | 0.6 | 1.5 | 0.8 |
| | | Vulcanization Accelerator MBTS *12 | 2 | 2 | 2 | 2 | 2 | 2 | 2 | 2 | 2 |
| | | Vulcanization Accelerator CBS *13 | 0.7 | 0.7 | 0.7 | 0.7 | 0.7 | 0.7 | 0.7 | 0.7 | 0.7 |
| | | Sulfur | 1.5 | 1.5 | 1.5 | 1.5 | 1.5 | 1.5 | 1.5 | 1.5 | 1.5 |
| Evaluations | | Unvulcanized Viscosity | 105 | 107 | 110 | 100 | 108 | 100 | 108 | 100 | 113 |
| | | tanδ | 85 | 89 | 82 | 100 | 85 | 100 | 89 | 100 | 82 |
| | | Abrasion Resistance | 107 | 106 | 106 | 100 | 105 | 100 | 105 | 100 | 104 |
| | | TF | 105 | 104 | 104 | 100 | 103 | 100 | 103 | 100 | 102 |

[Notes]

*1: emulsion-polymerized SBR, trade name: "JSR 1500," manufactured by JSR Corporation

*2: solution-polymerized SBR, trade name: "Tufdene 2000," manufactured by Asahi Kasei Corporation

*3: carbon black N220, trade name: "#80," manufactured by Asahi Carbon Co., Ltd.

*4: Nipsil AQ, BET specific surface area: 205 $m^2/g$, manufactured by Tohsoh Silica Corporation

∗5: bis(3-triethoxysilylpropyl) disulfide (average sulfur chain length: 2.35), silane coupling agent, trade name: "Si 75" (registered trademark), manufactured by Evonik Japan Co., Ltd.

∗6: zinc O,O'-di-(2-ethylhexyldithiophosphate), trade name: "Rhenocure ZTD/S," manufactured by Rhein Chemie Corporation

∗7: zinc O,O'-di-(n-butyldithiphsphate), trade name: "Rhenocure TP/S," manufactured by Rhein Chemie Corporation

∗8: microcrystalline wax, Ozoace 0701, manufactured by Nippon Seiro Co., Ltd.

∗9: N-(1,3-dimethylbutyl)-N'-phenyl-p-phenylenediamine, trade name: "Nocrac 6C," manufactured by Ouchi Shinko Chemical Industrial Co., Ltd.

∗10: antiaging agent TMQ, "Nonflex RD-S," manufactured by Seiko Chemical Co., Ltd.

∗11: 1,3-diphenylguanidine, trade name: "Sunseller D," manufactured by Sanshin Chemical Industry Co., Ltd.

∗12: di-2-benzothiazolyl disulfide, trade name: "Sunseller DM," manufactured by Sanshin Chemical Industry Co., Ltd.

∗13: vulcanization accelerator CBS, "Sunseller CM-G," manufactured by Sanshin Chemical Industry Co., Ltd.

As apparent from Table 1, the rubber compositions of Examples 1 to 3 using zinc O,O'-di-(2-ethylhexyldithiophosphate) as the accelerator (D) were improved in tanδ and the abrasion resistance as compared to the rubber compositions of Comparative Examples 1, 3 and 5 using no accelerator.

The rubber composition of Example 1 using zinc O,O'-di-(2-ethylhexyldithiophosphate) as the accelerator (D) was improved in the unvulcanized viscosity and the abrasion resistance as compared to the rubber composition of Comparative Example 2 using zinc 0,0'-di-(n-butyldithiophosphate) as the accelerator(D). The rubber composition of Example 2 using zinc O,O'-di-(2-ethylhexyldithiophosphate) as the accelerator (D) was improved in the unvulcanized viscosity and the abrasion resistance as compared to the rubber composition of Comparative Example 4 using zinc O,O'-di-(n-butyldithiophosphate) as the accelerator(D). The rubber composition of Example 3 using zinc O,O'-di-(2-ethylhexyldithiophosphate) as the accelerator (D) was improved in the unvulcanized viscosity and the abrasion resistance as compared to the rubber composition of Comparative Example 6 using zinc O,O'-di-(n-butyldithiophosphate) as the accelerator(D).

Consequently, it has been found that the rubber compositions using zinc O,O'-di-(2-ethylhexyldithiophosphate) as the accelerator (D) obtain the same or better processability and further can enhance the abrasion resistance as compared to the rubber compositions using zinc O,O'-di-(n-butyldithiophosphate) as the accelerator (D).

INDUSTRIAL APPLICABILITY

The rubber composition according to the present embodiment further enhances the activity of the coupling function of the silane coupling agent, is excellent in low-heat-generation property and abrasion resistance, and can provide a rubber composition enhanced in the processability in the unvulcanized state, and thus may be favorably applied to the members of various kinds of pneumatic tires for a passenger vehicle, a small pickup truck, a light passenger car, a light truck and a heavy vehicle (such as a truck, a bus and a construction vehicle), and particularly to a tread member of a pneumatic tire.

## Claims

**1.** A method for producing a rubber composition comprising a rubber component (A) containing a copolymer of a conjugated diene compound and an aromatic vinyl compound, a filler containing an inorganic filler (B), a silane

coupling agent (C), and at least one accelerator (D) selected from the group consisting of zinc dithiophosphates represented by the general formula (1):

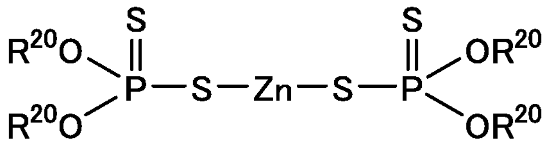

(1)

wherein, $R^{20}$'s are each independently hydrogen or a monovalent hydrocarbon group, and at least one of $R^{20}$'s is a substituted or unsubstituted linear alkyl group having from 7 to 18 carbon atoms, a substituted or unsubstituted branched-chain alkyl group having from 7 to 18 carbon atoms, or a substituted or unsubstituted cycloalkyl group having from 7 to 18 carbon atoms,
wherein said method comprises a plurality of stages of kneading,
wherein in the first stage, the rubber component (A), the whole or a part of the inorganic filler (B) and the whole or a part of the silane coupling agent (C) are kneaded, and then the accelerator (D) is added thereto and further kneaded.

**2.** The method for producing a rubber composition according to claim 1, wherein at least one of the $R^{20}$'s is a 2-ethylhexyl group.

**3.** The method for producing a rubber composition according to claim 1, wherein at least two of the $R^{20}$'s are 2-ethylhexyl groups.

**4.** The method for producing a rubber composition according to any one of claims 1 to 3, wherein the silane coupling agent (C) is at least one compound selected from the group consisting of the compounds represented by the following general formulae (I) and (II):

$$(R^1O)_{3-p}(R^2)_pSi\text{-}R^3\text{-}S_a\text{-}R^3\text{-}Si(OR^1)_{3-r}(R^2)_r \cdots \quad (I)$$

wherein, $R^1$'s may be the same as or different from each other, and each represents a linear, cyclic or branched alkyl group having from 1 to 8 carbon atoms, or a linear or branched alkoxyalkyl group having from 2 to 8 carbon atoms; $R^2$'s may be the same as or different from each other, and each represents a linear, cyclic or branched alkyl group having from 1 to 8 carbon atoms; $R^3$'s may be the same as or different from each other, and each represents a linear or branched alkylene group having from 1 to 8 carbon atoms; a is from 2 to 6 in terms of average value; and p and r may be the same as or different from each other, and are each from 0 to 3 in terms of average value, provided that both p and r are not 3 simultaneously; and

$$(R^4O)_{3-s}(R^5)_sSi\text{-}R^6\text{-}S_k\text{-}R^7\text{-}S_k\text{-}R^6\text{-}Si(OR^4)_{3-t}(R^5)_t \cdots \quad (II)$$

wherein, $R^4$'s may be the same as or different from each other, and each represents a linear, cyclic or branched alkyl group having from 1 to 8 carbon atoms, or a linear or branched alkoxyalkyl group having from 2 to 8 carbon atoms; $R^5$'s may be the same as or different from each other, and each represents a linear, cyclic or branched alkyl group having from 1 to 8 carbon atoms; $R^6$'s may be the same as or different from each other, and each represents a linear or branched alkylene group having from 1 to 8 carbon atoms; $R^7$ represents any one of divalent groups represented by the general formulae ($-S-R^8-S-$), ($-R^9-S_{m1}-R^{10}-$) and ($-R^{11}-S_{m2}-R^{12}-S_{m3}-R^{13}-$) (wherein $R^8$ to $R^{13}$ may be the same as or different from each other, and each represents a divalent aliphatic hydrocarbon group having from 1 to 20 carbon atoms, a divalent alicyclic hydrocarbon group having from 1 to 20 carbon atoms, a divalent aromatic group or a divalent organic group containing a hetero element other than sulfur and oxygen; and m1, m2 and m3 may be the same as or different from each other, and are each 1 or more and less than 4 in terms of average value); k's may be the same as or different from each other, and are each from 1 to 6 in terms of average value; and s and t may be the same as or different from each other, and are each from 0 to 3 in terms of average value, provided that both s and t are not 3 simultaneously.

**5.** The method for producing a rubber composition according to claim 4, wherein the silane coupling agent (C) is a compound represented by the general formula (I).

6. The method for producing a rubber composition according to any one of claims 1 to 5, wherein the inorganic filler (B) is silica.

7. The method for producing a rubber composition according to any one of claims 1 to 6, wherein
the rubber composition contains an organic acid, and
the molar quantity X of the organic acid in the rubber composition in the first stage is in a relation of the following formula [1] relative to the molar quantity Y of the accelerator (D):

$$0 \leq X \leq 1.5 \times Y \qquad \ldots [1]$$

8. The method for producing a rubber composition according to claim 7, wherein the organic acid in the rubber composition is added in the second stage of kneading or later.

9. The method for producing a rubber composition according to claim 7 or 8, wherein the maximum temperature of the rubber composition in the first stage is 120°C or higher and 190°C or lower.

**Patentansprüche**

1. Verfahren für die Herstellung einer Kautschukzusammensetzung umfassend eine Kautschukkomponente (A), die ein Copolymer einer konjugierten Dienverbindung und einer aromatischen Vinylverbindung, einen Füllstoff, der einen anorganischen Füllstoff (B) enthält, einen Silanhaftvermittler (C) und mindestens einen Beschleuniger (D) umfasst ausgewählt aus der Gruppe bestehend aus Zinkdithiophosphaten, die durch die allgemeine Formel (1) dargestellt sind:

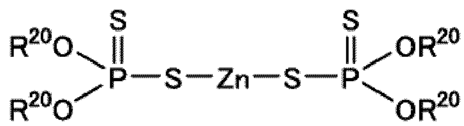

(1)

wobei $R^{20}$ jedes unabhängig Wasserstoff oder eine einwertige Kohlenwasserstoffgruppe sind und mindestens eines der $R^{20}$ eine substituierte oder unsubstituierte lineare Alkylgruppe, die 7 bis 18 Kohlenstoffatome aufweist, eine substituiertem oder unsubstituierte verzweigtkettige Alkylgruppe, die 7 bis 18 Kohlenstoffatome aufweist, oder eine substituierte oder unsubstituierte Cycloalkylgruppe, die 7 bis 18 Kohlenstoffatome aufweist, ist,
wobei das Verfahren eine Mehrzahl von Knetstufen umfasst, wobei, in der ersten Stufe, die Kautschukkomponente (A), der ganze oder ein Teil des organischen Füllstoffs (B) und das ganze oder ein Teil des Silanhaftvermittlers (C) geknetet werden und dann der Beschleuniger (D) dazugegeben und noch weiter geknetet wird.

2. Verfahren für die Herstellung einer Kautschukzusammensetzung nach Anspruch 1, wobei mindestens eines der $R^{20}$ eine 2-Ethylhexylgruppe ist.

3. Verfahren die Herstellung einer Kautschukzusammensetzung nach Anspruch 1, wobei mindestens zwei der $R^{20}$ 2-Ethylhexylgruppen sind.

4. Verfahren für die Herstellung einer Kautschukzusammensetzung nach einem der Ansprüche 1 bis 3, wobei der Silanhaftvermittler (C) mindestens eine Verbindung ist ausgewählt aus der Gruppe bestehend aus den Verbindungen, die durch die folgenden allgemeinen Formeln (I) und (II) dargestellt sind:

$$(R^1O)_{3-p}(R^2)_pSi\text{-}R^3\text{-}S_a\text{-}R^3\text{-}Si(OR^1)_{3-r}(R^2)_r \ldots \qquad (I)$$

wobei die $R^1$ gleich oder verschieden voneinander sein können und jedes eine lineare, cyclische oder verzweigte Alkylgruppe, die 1 bis 8 Kohlenstoffatome aufweist, oder eine lineare oder verzweigte Alkoxyalkylgruppe, die 2 bis 8 Kohlenstoffatome aufweist, darstellt; $R^2$ gleich oder verschieden voneinander sein können und jedes eine lineare, cyclische oder verzweigte Alkylgruppe darstellt, die 1 bis 8 Kohlenstoffatome aufweist; $R^3$ gleich ob oder verschieden

voneinander sein können und jedes eine lineare oder verzweigte Alkylengruppe darstellt, die 1 bis 8 Kohlenstoffatome aufweist; a 2 bis 6 als Durchschnittswert beträgt; und p und r gleich oder verschieden voneinander sein können und jedes 0 bis 3 als Durchschnittswert beträgt, vorausgesetzt, dass sowohl p als auch r nicht gleichzeitig betragen; und

$$(R^4O)_{3-s}(R^5)_sSi\text{-}R^6\text{-}S_k\text{-}R^7\text{-}S_k\text{-}R^6\text{-}Si(OR^4)_{3-t}(R^5)_t \ldots \qquad (II)$$

wobei $R^4$ gleich ob oder verschieden voneinander sein können und jedes eine lineare, cyclische oder verzweigte Alkylgruppe, die 1 bis 8 Kohlenstoffatome aufweist, oder eine lineare oder verzweigte Alkoxyalkylgruppe darstellt, die 2 bis 8 Kohlenstoffatome aufweist; $R^5$ gleich oder verschieden voneinander sein können und jedes eine lineare, cyclische oder verzweigte Alkylgruppe darstellt, die 1 bis 8 Kohlenstoffatome aufweist; $R^6$ gleich ob oder verschieden voneinander sein können und jedes eine lineare oder verzweigte Alkylengruppe darstellt, die 1 bis 8 Kohlenstoffatome aufweist; $R^7$ irgend eine von zweiwertigen Gruppen darstellt, die durch die allgemeinen Formeln ($-S-R^8-S-$), ($-R^9-S_{m1}-R^{10}$) und ($-R^{11}-S_{m2}-R^{12}-S_{m3}-R^{13}$) dargestellt ist (wobei $R^8$ bis $R^{13}$ gleich oder verschieden voneinander sein können und jedes eine zweiwertige aliphatische Kohlenwasserstoffgruppe, die 1 bis 20 Kohlenstoffatome aufweist, eine zweiwertige alicyclische Kohlenwasserstoffgruppe, die 1 bis 20 Kohlenstoffatome aufweist, eine zweiwertige aromatische Gruppe oder eine zweiwertige organische Gruppe darstellt, die ein Heteroelement enthält, das etwas anderes als Schwefel und Sauerstoff ist; und m1, m2 und m3 gleich oder verschieden voneinander sein können und jedes 1 oder mehr und weniger als 4 als Durchschnittswert beträgt); k gleich oder verschieden voneinander sein können und jedes 1 bis 6 als Durchschnittswert beträgt; und s und t gleich oder verschieden voneinander sein können und jedes 0 bis 3 als Durchschnittswert beträgt, vorausgesetzt, dass sowohl s als auch t nicht gleichzeitig 3 betragen.

5. Verfahren für die Herstellung einer Kautschukzusammensetzung nach Anspruch 4, wobei der Silanhaftvermittler (C) eine Verbindung ist, die durch die allgemeine Formel (I) dargestellt ist.

6. Verfahren für die Herstellung einer Kautschukzusammensetzung nach einem der Ansprüche 1 bis 5, wobei der anorganische Füllstoff (B) Siliciumdioxid ist.

7. Verfahren für die Herstellung einer Kautschukzusammensetzung nach einem der Ansprüche 1 bis 6, wobei die Kautschukzusammensetzung eine organische Säure enthält und die molare Menge X der organischen Säure in der Kautschukzusammensetzung in der ersten Stufe sich in einem Verhältnis der folgenden Formel [1] mit Bezug auf die molare Menge Y des Beschleunigers (D) befindet:

$$0 \leq X \leq 1{,}5 \times Y \qquad \ldots..[1]$$

8. Verfahren für die Herstellung einer Kautschukzusammensetzung nach Anspruch 7, wobei die organische Säure in der Kautschukzusammensetzung in der zweiten Knetstufe oder später zugegeben wird.

9. Verfahren für die Herstellung einer Kautschukzusammensetzung nach Anspruch 7 oder 8, wobei die Höchsttemperatur der Kautschukzusammensetzung in der ersten Stufe 120°C oder höher und 190°C oder niedriger ist.

## Revendications

1. Procédé de production d'une composition de caoutchouc comprenant un composant de caoutchouc (A) contenant un copolymère d'un composé diène conjugué et d'un composé de vinyle aromatique, une charge contenant une charge inorganique (B), un agent de couplage au silane (C), et au moins un accélérateur (D) sélectionné dans le groupe constitué des dithiophosphates de zinc représentés par la formule générale (1):

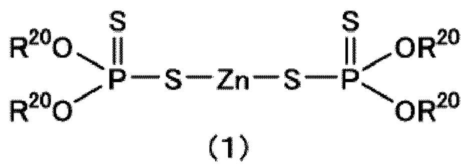

(1)

dans laquelle, les $R^{20}$ sont chacun indépendamment un groupe hydrogéno ou un groupe hydrocarboné monovalent, et au moins un des $R^{20}$ est un groupe alkyle linéaire substitué ou non substitué ayant de 7 à 18 atomes de carbone, un groupe alkyle à chaîne ramifiée substitué ou non substitué ayant de 7 à 18 atomes de carbone, ou un groupe cycloalkyle substitué ou non substitué ayant de 7 à 18 atomes de carbone,
ledit procédé comprenant une pluralité de stades de malaxage,
dans le premier stade, le composant de caoutchouc (A), l'intégralité ou une partie de la charge inorganique (B) et l'intégralité ou une partie de l'agent de couplage au silane (C) étant malaxés, et ensuite l'accélérateur (D) étant ajouté à ceux-ci et malaxés de manière supplémentaire.

**2.** Procédé de production d'une composition de caoutchouc selon la revendication 1, dans lequel au moins un des $R^{20}$ est un groupe 2-éthylhexyle.

**3.** Procédé de production d'une composition de caoutchouc selon la revendication 1, au moins deux des $R^{20}$ étant des groupes 2-éthylhexyle.

**4.** Procédé de production d'une composition de caoutchouc selon l'une quelconque des revendications 1 à 3, l'agent de couplage au silane (C) étant au moins un composé sélectionné dans le groupe constitué des composés représentés par les formules générales suivantes (I) et (II):

$$(R^1O)_{3-p}(R^2)_pSi\text{-}R^3\text{-}S_a\text{-}R^3\text{-}Si(OR^1)_{3-r}(R^2)_r \ldots \qquad (I)$$

dans laquelle, les $R^1$ peuvent être identiques ou différents l'un de l'autre, et chacun représente un groupe alkyle linéaire, cyclique ou ramifié ayant de 1 à 8 atomes de carbone, ou un groupe alcoxyalkyle linéaire ou ramifié ayant de 2 à 8 atomes de carbone; les $R^2$ peuvent être identiques ou différents l'un de l'autre, et chacun représente un groupe alkyle linéaire, cyclique ou ramifié ayant de 1 à 8 atomes de carbone; les $R^3$ peuvent être identiques ou différents l'un de l'autre, et chacun représente un groupe alkylène linéaire ou ramifié ayant de 1 à 8 atomes de carbone; a ayant la valeur de 2 à 6 en termes de valeur moyenne; et p et r peuvent être identiques ou différents l'un de l'autre, et ont chacun la valeur de 0 à 3 en termes de valeur moyenne, à condition qu'à la fois p et r n'aient pas simultanément la valeur de 3; et

$$(R^4O)_{3-s}(R^5)_sSi\text{-}R^6\text{-}S_k\text{-}R^7\text{-}S_k\text{-}R^6\text{-}Si(OR^4)_{3-t}(R^5)_t \ldots \qquad (II)$$

dans laquelle, les $R^4$ peuvent être identiques ou différents l'un de l'autre, et chacun représente un groupe alkyle linéaire, cyclique ou ramifié ayant de 1 à 8 atomes de carbone, ou un groupe alcoxyalkyle linéaire ou ramifié ayant de 2 à 8 atomes de carbone; les $R^5$ peuvent être identiques ou différents l'un de l'autre, et chacun représente un groupe alkyle linéaire, cyclique ou ramifié ayant de 1 à 8 atomes de carbone; les $R^6$ peuvent être identiques ou différents l'un de l'autre, et chacun représente un groupe alkylène linéaire ou ramifié ayant de 1 à 8 atomes de carbone; $R^7$ représente l'un quelconque des groupes divalents représentés par les formules générales ($-S-R^8-S-$), ($-R^9-S_{m1}-R^{10}-$) et ($-R^{11}-S_{m2}-R^{12}-S_{m3}-R^{13}$) (dans lesquelles $R^8$ à $R^{13}$ peuvent être identiques ou différents l'un de l'autre, et chacun représente un groupe hydrocarbure aliphatique divalent ayant de 1 à 20 atomes de carbone, un groupe hydrocarbure alicyclique divalent ayant de 1 à 20 atomes de carbone, un groupe aromatique divalent ou un groupe organique divalent ayant un hétéro élément autre que le soufre et l'oxygène; et m1, m2 et m3 peuvent être identiques ou différents l'un de l'autre, et ont chacun la valeur de 1 ou plus et moins de 4 en termes de valeur moyenne); les k peuvent être identiques ou différents l'un de l'autre, et ont chacun la valeur de 1 à 6 en termes de valeur moyenne; et s et t peuvent être identiques ou différents l'un de l'autre, et ont chacun la valeur de 0 à 3 en termes de valeur moyenne, à condition qu'à la fois s et t n'aient pas simultanément la valeur de 3.

**5.** Procédé de production d'une composition de caoutchouc selon la revendication 4, l'agent de couplage au silane (C) étant un composé représenté par la formule générale (I).

**6.** Procédé de production d'une composition de caoutchouc selon l'une quelconque des revendications 1 à 5, la charge inorganique (B) étant la silice.

**7.** Procédé de production d'une composition de caoutchouc selon l'une quelconque des revendications 1 à 6,
la composition de caoutchouc contenant un acide organique, et
la quantité molaire X de l'acide organique dans la composition de caoutchouc au premier stade étant en relation avec la formule suivante [1] par rapport à la quantité molaire Y de l'accélérateur (D):

$$0 \leq X \leq 1,5 \text{ x } Y \qquad \ldots [1]$$

**8.** Procédé de production d'une composition de caoutchouc selon la revendication 7, l'acide organique dans la composition de caoutchouc étant ajouté au second stade du malaxage ou plus tard.

**9.** Procédé de production d'une composition de caoutchouc selon les revendications 7 ou 8, la température maximale de la composition de caoutchouc au premier stade étant de 120°C ou plus et de 190°C ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002521516 T